## Europäisches Patentamt
## European Patent Office
## Office européen des brevets

(11) Publication number: **0 172 429**
**B1**

(12) EUROPEAN PATENT SPECIFICATION

(45) Date of publication of patent specification: **28.02.90**

(51) Int. Cl.⁵: **G 21 C 3/32**

(21) Application number: **85109190.0**

(22) Date of filing: **23.07.85**

(54) Individual neutron-source rod positioning mechanism in a nuclear fuel assembly.

<table>
<tr><td>

(30) Priority: **20.08.84 US 642607**

(43) Date of publication of application:
**26.02.86 Bulletin 86/09**

(45) Publication of the grant of the patent:
**28.02.90 Bulletin 90/09**

(84) Designated Contracting States:
**BE DE FR GB IT SE**

(56) References cited:
**FR-A-1 506 946**
**FR-A-1 546 968**
**FR-A-2 400 751**
**US-A-3 515 638**

</td><td>

(73) Proprietor: **WESTINGHOUSE ELECTRIC CORPORATION**
**Westinghouse Building Gateway Center**
**Pittsburgh Pennsylvania 15222 (US)**

(72) Inventor: **Wilson, John Francis**
**3560 Meadowgate Drive**
**Murrysville Pennsylvania 15668 (US)**
Inventor: **Gjertsen, Robert Kenneth**
**126 Penn Lear Drive**
**Monroeville Pennsylvania 15146 (US)**
Inventor: **Cerni, Samuel**
**101 Kingsdale Road**
**Pittsburgh Pennsylvania 15221 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to a neutron source arrangement in a nuclear reactor for facilitating core startup and, more particularly, to a mechanism for positioning secondary sources in guide thimbles.

A pressurized-water nuclear reactor (PWR) typically includes a large number of fuel assemblies each of which is composed of top and bottom nozzles with a plurality of elongate transversely spaced guide thimbles extending between the nozzles, and a plurality of transverse grids axially spaced along the guide thimbles. Also, elongated fuel rods are transversely spaced apart and supported by the grids between the top and bottom nozzles in an organized array.

In addition to being structural elements of the fuel assembly, the guide thimbles provide channels for insertion of burnable poison rods, neutron absorber control rods, thimble plugs, and primary and secondary neutron source assemblies into the reactor core. The purpose of a neutron source assembly is to facilitate startup of the reactor core. The primary source spontaneously emits neutrons during initial core loading and reactor startup. After the primary source decays beyond the desired neutron flux level, neutrons are then supplied by the secondary source. It becomes the source of neutrons during periods of low neutron flow, such as during refueling and the subsequent startups.

Historically, in the case of standard PWR design, the reactor core employs four source assemblies: two primary source assemblies and two secondary source assemblies. Each primary source assembly contains one primary source rod and many burnable poison rods. Each secondary source assembly contains a symmetrical grouping of four secondary source rods and several burnable poison rods. The secondary source rods and poison rods are ganged together on, and suspended from, a spider located between the top nozzle and the upper core plate. The spider is held in position by a holddown spring which reacts with the upper core support plate.

However, in more recent advanced PWR design which requires secondary sources for reactor core startup, there is no room for a spider between the upper core support plate and the top nozzle. Consequently, a need exists for an alternative technique of positioning the secondary source rods in the guide thimbles, and the invention has for the principal object to satisfy this need.

Accordingly, the invention resides in a secondary source positioning mechanism which takes advantage of existing structural features of the upper core support plate to individually locate secondary source rods in lateral and axial directions. The positioning mechanism includes a locating boss which registers against an existing chamfer on the lower side of the upper core plate, and a spring-actuated holddown device connected to the locating boss and coupled to the upper end of the secondary source rod so as to react against the upper core plate in positioning the upper end of the secondary source rod in the axial and lateral directions. Thus, the invention achieves its objective without requiring specific modifications to be made to the fuel assembly and upper core plate.

More specifically, the secondary source positioning mechanism according to the invention is for a fuel assembly which includes top and bottom nozzles with a plurality of guide thimbles extending between and interconnecting the nozzles and an upper core plate positioned adjacent to and above the top nozzle. The upper core plate includes a multiplicity of flow openings to allow coolant to pass upwardly through the core, and at least some of these openings are aligned over the guide thimbles such that control rods and the like can pass down through the core plate and be inserted into some of the guide thimbles of the fuel assembly. Other vacant guide thimbles located near the edge of the core receive rods which contain the secondary sources.

The positioning mechanism locates an individual one of the secondary source rods in a respective guide thimble aligned with an opening defined through the upper core plate. The opening has seating means defined about it on the lower side of the core plate. The positioning mechanism has locating means which registers against the core plate seating means and resilient holddown means in a manner which restrains the upper end in the lateral direction and positions the secondary source rod in the axial direction.

Such a positioning mechanism for positioning and individual neutron-source rod according to the invention is described in claim 1.

The resilient holddown means includes an outer spring retainer which is attached to the upper end of the secondary source rod and has an outwardly projecting ledge which rests on an upper portion of the guide thimble. An inner spring guide retainer, is connected at its upper end to the locating means, and at its lower end slides relative to the outer spring retainer. Finally, a holddown means encircles the inner spring retainer and extends downwardly within the outer spring retainer so as to abut an internal annular ledge of the outer retainer and assume a preloaded state against the lower side of the locating means. In such state, the holddown spring pushes downwardly on the outer retainer and the secondary source rod and upwardly on the locating means. Thus, the source rod is held down by the spring reacting against the upper core plate.

A preferred embodiment of the invention will now be described, by way of example only, with reference to the accompanying drawings, in which:-

Fig. 1 is an elevational view of a portion of an upper core support plate of a fuel assembly shown in vertically foreshortened form and with parts thereof broken away for clarity;

Fig. 2 is an enlarged, fragmentary sectional view of one of the secondary source rods and of the associated positioning mechanism embodying the invention; and

Fig. 3 is an enlarged, fragmentary sectional view of the individual source positioning mechanism of Fig. 1 shown connected to the upper end of the secondary source rod.

In the following description, like reference characters designate like or corresponding parts throughout the several views of the drawings, and terms such as "forward", "rearward", "left", "right", "upwardly", "downwardly", and the like, are used as words of convenience not to be construed as limiting terms.

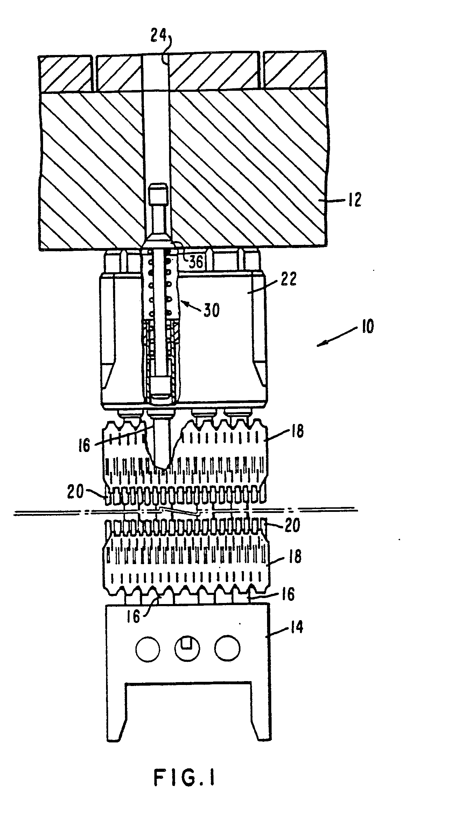

Referring now to the drawings, and particularly to Fig. 1, the fuel assembly shown therein and generally designated with the numeral 10 basically comprises a lower end structure or bottom nozzle 14 for supporting the assembly on a lower core plate (not shown) in the core region of a reactor (not shown); a plurality of control rod guide tubes or thimbles 16 projecting upward from the bottom nozzle 14; several transverse grids 18 axially spaced along the guide thimbles 16; an organized array of elongate fuel rods 20 transversely spaced and supported by the grids 18; and an upper end structure or top nozzle 22 attached to the upper ends of the guide thimbles 16. The fuel assembly 10 forms an integral unit capable of being conventionally handled without damaging the assembly parts.

The upper core support plate 12 extends across the top of the fuel assembly 10 as well as across the top of other identical fuel assemblies (not shown) arranged within the reactor core. The core plate 12 has flow openings, such as opening 24, to allow coolant to pass upwardly through the core. At least some of these openings are axially aligned with the guide thimbles 16 to permit insertion of the control rods (not shown) therethrough and into the guide thimbles 16.

In addition to receiving control rods used to regulate the power level of the reactor, the guide thimbles provide channels for the insertion of neutron sources into the reactor core. Especially, certain ones of the guide thimbles 16 located near the edge of the core receive rods 26 which contain secondary neutron sources 28. Typically, the sources 28 are in the form of antimony-beryllium pellets stacked within an elongate rod. As known, the purpose of the sources 28 is to facilitate startup of the reactor core.

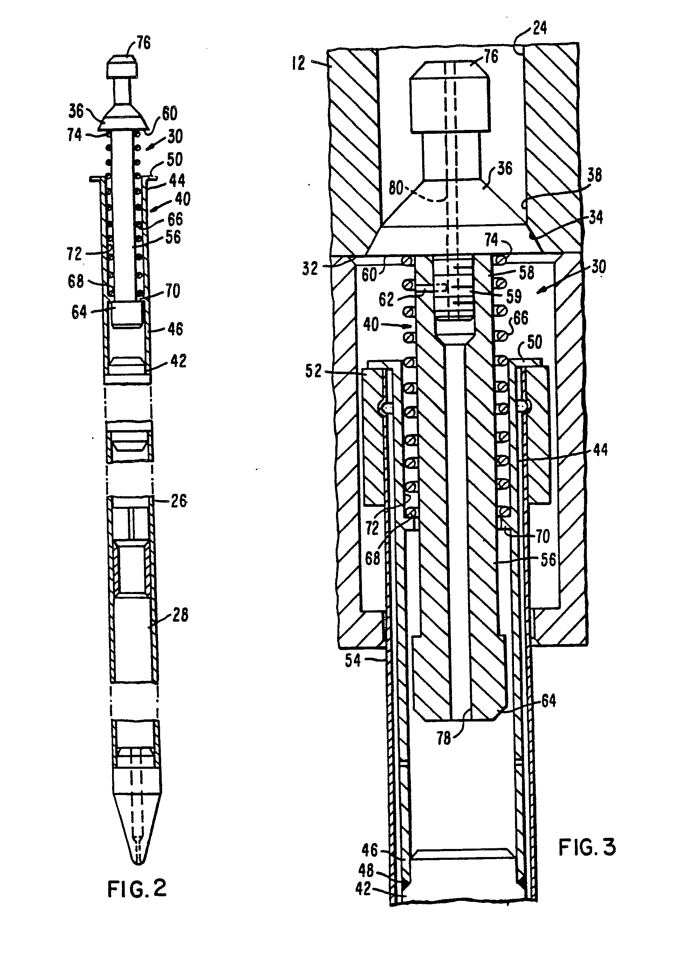

Referring now also to Figs. 2 and 3, the invention provides a mechanism, generally designated with numeral 30, for positioning an individual neutron source rod 26 in an associated guide thimble 16 of the fuel assembly 10. About the coolant flow opening 24 aligned with the respective thimble 16, the core plate 12, at its lower side 32, has a chamber 34 serving as a socket for seating the mechanism 30, as explained below.

Basically, the positioning mechanism 30 comprises a locating means in the form of a tapered or conical boss 36 which is seated in the socket 34 and extends into the opening 24 from the lower end 38 thereof. The mechanism 30 includes further resilient holddown means 40 connecting the upper end 42 of the secondary source rod 26 to the locating boss 36 in a manner resiliently restraining the upper end of the source rod in the lateral direction and positioning the source rod 26 in the axial direction.

The resilient holddown means 40 comprises a tubular outer spring retainer 44 which has its lower end 46 joined to the upper end plug 42 of the source rod 26 by means of a girth weld 48 and has at its upper end an annular flange 50 extending radially outward and resting upon a nozzle expansion collar 52 which is part of an upper extension 54 of the guide thimble 16.

The holddown means 40 further includes an elongate inner spring guide retainer 56 which has an internally threaded axial bore extending into its upper end 58 where it is connected to an externally threaded sleeve 59 depending from the underside 60 of the locating boss 36. As seen in Fig. 3, a lock pin 62 extends transversely through the threaded connection of the retainer upper end 58 and the mounting sleeve 59. The inner retainer 56 which is substantially cylindrical extends downwardly within the outer retainer 44 with radial clearance therebetween and has a lower end portion 64 with a diameter larger than the diameter of the remainder of the inner retainer.

Finally, the holddown means 40 includes a holddown coil spring 66 which fits between the outer retainer 44 and the inner retainer 56. At its lower end 68, the holddown spring 66 rests against an annular flange 70 formed on the internal wall 72 of the outer retainer 44 about a quarter of the length of the latter down from its upper flange 50. At its upper end 74, the holddown spring 66 bears against the underside 60 of the locating boss 36. In its normal condition, the holddown spring 66 is partially compressed so as to preload the boss 36 axially upward against the seat 34 and to push down on the flange 70 of retainer 44. Thus the source rod 26 is held down by the spring 66 reacting against the upper core support plate 12 through the locating boss 36. The spring is designed to provide sufficient force to hold the source rod 26 against upward hydraulic flow forces and to compensate for variations in length of the guide thimble due to thermal growth and irradiation growth. Axial movement can be accommodated by the holddown means 40 of the positioning mechanism 30 since the outer retainer 44 is movable relative to the inner retainer 56.

At its upper end, the positioning mechanism 30 has a handling-tool fitting 76 which is connected to the top of the locating boss 36 and extends upwardly in the flow opening 24. The fitting 76 can be grasped by a handling tool (not shown) using conventional techniques. Coolant flowing out of the guide thimble 16 will flow upwards through an axial bore 78 in the inner retainer 56, through an axial passageway 80 in the mounting stem 59, the boss 36 and the handling fitting 76 and into the coolant flow passage 24 in the support plate 12.

From the foregoing, it will be appreciated that the positioning mechanism 30 reacting with the guide thimble 16 and the upper core plate 12 provides an effective, resilient holddown force for restraining the upper end of the source rod 26 in the lateral direction transverse to the axis of the rod and for positioning the source rod 26 in the axial direction, and it does so essentially without requiring any modification to be made to the fuel assembly 10 or to the upper core support plate 12.

## Claims

1. A positioning mechanism for positioning an individual neutron-source rod (26) in a guide thimble (16) which forms part of a nuclear fuel assembly (10) and is aligned with a coolant flow opening (24) through a reactor core plate (12) extending transversely above the fuel assembly, characterized by a seat (34) formed on the underside (32) of said reactor core plate (12) about said flow opening (24) therein, a locating means (36) registering with and held in said seat (34), and resilient holddown means (44, 56, 66) connecting the neutron-source rod (26) to said locating means (36) in a manner such as to restrain the neutron-source rod in a lateral direction and to position it in an axial direction.

2. A positioning mechanism according to claim 1, characterized in that said locating means (36) comprises a tapered boss which has a base portion thereof seated in said seat (34) and projects upwards into the flow opening (24).

3. A positioning mechanism as claimed in claim 2, characterized in that said boss (36) has a handling-tool fitting (76) connected thereto and extending therefrom upwards in said flow opening (24).

4. A positioning mechanism as claimed in claim 1, 2 or 3, characterized in that said resilient holddown means (44, 56, 66) includes a holddown spring (66) interposed between the neutron-source (26) and the locating means (36) so as to apply to the neutron-source rod a holddown force, said holddown spring (66) being seated against said locating means and reacting therethrough against the core plate (12).

5. A positioning mechanism according to claim 4, characterized in that said resilient holddown means (44, 56, 66) includes a tubular outer spring retainer (44) which is retained at an upper end thereof in fixed relationship with respect to said guide thimble (16) through an extension (54) and is connected at a lower end thereof to the neutron-source rod (26), and an elongate inner spring retainer (56) connected at an upper end thereof to said locating means (36) and extending therefrom downward into the tubular outer spring retainer, with radial clearance therebetween, said holddown spring (66) being a spiral spring disposed on the elongate inner spring retainer and held under partial compression between said locating means (36) and a spring seat (70) formed on the inside of the tubular outer spring retainer (56).

6. A positioning mechanism according to claim 5, characterized in that said elongate inner spring retainer (56) and the locating means (36) have axial passageways (78, 80) formed therein which place the interior of the guide thimble (26) in coolant flow communication with said flow opening (24) in the core plate (12).

## Patentansprüche

1. Positionierungsmechanismus zum Positionieren eines einzelnen Neutronenquellenstabs (26) in einem Führungsrohr (16), das Teil eines Kernbrennelements (10) bildet und mit einer Kühlmitteldurchtrittsöffnung (24) einer quer über dem Brennelement verlaufenden Kerntragplatte (12) fluchtet, gekennzeichnet durch einen an der Unterseite (32) der Kerntragplatte (12) um die darin gebildete Durchtrittsöffnung (24) herum gebildeten Sitz (34), ein damit fluchtendes und in dem Sitz (34) gehaltenes Positionierungsorgan (36), und federnde Niederhaltemittel (44, 56, 66), welche den Neutronenquellenstab (26) in einer solchen Weise mit dem Positionierungsorgan (36) verbinden, daß der Neutronenquellenstab seitlich festgelegt und in axialer Richtung positioniert wird.

2. Positionierungsmechanismus nach Anspruch 1, dadurch gekennzeichnet, daß das Positionierungsorgan (36) einen konischen Kopf aufweist, der einen in dem Sitz (34) anliegenden Basisabschnitt aufweist und nach oben in die Durchtrittsöffnung (24) hineinragt.

3. Positionierungsmechanismus nach Anspruch 2, dadurch gekennzeichnet, daß der Kopf (36) ein damit verbundenes und von diesem nach oben in die Durchtrittsöffnung (24) hineinragendes Anschlußstück (76) für ein Handhabungswerkzeug aufweist.

4. Positionierungsmechanismus nach Anspruch 1, 2 oder 3, dadurch gekennzeichnet, daß die federnden Niederhaltemittel (44, 56, 66) eine Niederhaltefeder (66) aufweisen, die zwischen dem Neutronenquellenstab (26) und dem Positionierungsorgan (36) derart angeordnet ist, daß sie eine Niederhaltekraft auf den Neutronenquellenstab ausübt, und daß die Niederhaltefeder (66) sich mittelbar über das Positionierungsorgan an der Kerntragplatte (12) abstützt.

5. Positionierungsmechanismus nach Anspruch 4, dadurch gekennzeichnet, daß die federnden Niederhaltemittel (44, 56, 66) ein rohrförmiges äußeres Federgehäuse (44), das an seinem oberen Ende mit Bezug auf das Führungsrohr (16) über einen Fortsatz (54) desselben festgelegt und mit seinem unteren Ende mit dem Neutronenquellenstab (26) verbunden ist, und eine längliche innere Federführung (56) aufweist, die mit ihrem oberen Ende an dem Positionierungsorgan (36) befestigt ist und von diesem abwärts in das rohrförmige äußere Federgehäuse mit dazwischen gebildetem Radialabstand hineinragt, und daß die Niederhaltefeder (66) eine Spiralfeder ist, die auf der länglichen inneren Federführung sitzt und teilweise zusammengedrückt zwischen dem Positionierungsorgan (36) und einem an der Innenseite des rohrförmigen äußeren Federgehäuses (56) gebildeten Federsitz (70) gehalten wird.

6. Positionierungsmechanismus nach Anspruch 5, dadurch gekennzeichnet, daß die längliche innere Federführung (56) und das Positionierungsorgan (36) darin gebildete axiale Kanäle (78, 80) aufweisen, welche das Innere des Führungsrohrs (26) in Kühlmittelströmungsverbindung mit der Durchtrittsöffnung (24) der Kerntragplatte (12) setzen.

**Revendications**

1. Mécanisme de positionnement pour positionner une barre individuelle (26) de source de neutrons dans un tube-guide (16) qui fait partie d'un assemblage combustible nucléaire (10) et est aligné avec une ouverture (24) de circulation de réfrigérant à travers une plaque (12) du coeur du réacteur, s'étendant transversalement au-dessus de l'assemblage combustible, caractérisé en ce qu'il comporte un siège (34) formé sur le côté inférieur (32) de ladite plaque (12) du coeur de réacteur, autour de ladite ouverture de circulation (24) situé dans cette dernière, un moyen de positionnement (36) coincidant avec et maintenu dans ledit siège (34), et des moyens élastiques de retenue (44, 56, 66) reliant la barre (26) de source de neutrons audit moyen de positionnement (36) de manière à retenir la barre de source de neutrons dans une direction latérale et à la positionner dans une direction axiale.

2. Mécanisme de positionnement selon la revendication 1, caractérisé en ce que ledit moyen de positionnement (36) comprend un bossage conique qui comporte une partie de base logée dans ledit siège (34) et qui s'étend vers le haut à l'intérieur de l'ouverture de circulation (24).

3. Mécanisme de positionnement selon la revendication 2, caractérisé en ce que ledit bossage (36) comporte un embout de montage (76) pour outil de manipulation, qui est relié à ce bossage et qui s'étend à partir de celui-ci vers le haut dans ladite ouverture de circulation (24).

4. Mécanisme de positionnement selon la revendication 1, 2 ou 3, caractérisé en ce que lesdits moyens élastiques de retenue (44, 56, 66) comportent un ressort de retenue (66) intercalé entre la barre (26) de source de neutrons et le moyen de positionnement (36) de manière à appliquer sur la barre de source de neutrons une force de retenue, ledit ressort de retenue (66) étant en butée contre ledit moyen de positionnement et réagissant à travers celui-ci contre la plaque du coeur (12).

5. Mécanisme de positionnement selon la revendication 4, caractérisé en ce que lesdits moyens de retenue élastiques (44, 56, 66) comportent un élément externe tubulaire (44) de maintien de ressort qui est retenu à son extrémité supérieure fixement par rapport audit tube-guide (16) par l'intermédiaire d'un prolongement (54) et est relié à son extrémité inférieure à la barre (26) de source de neutrons, et un élément interne allongé (56) de maintien de ressort relié à sa partie supérieure audit moyen de positionnement (36) et s'étendant à partir de celui-ci vers le bas à l'intérieur de l'élément externe tubulaire de maintien de ressort, avec un jeu radial entre eux, ledit ressort de retenue (66) étant un ressort hélicoïdal disposé sur l'élément interne allongé de maintien de ressort et maintenu sous compression partielle entre ledit moyen de positionnement (36) et un siège (70) de ressort formé à l'intérieur de l'élément externe tubulaire (44) de maintien de ressort.

6. Mécanisme de positionnement selon la revendication 5, caractérisé en ce que dans ledit élément interne allongé (56) de maintien de ressort et ledit moyen de positionnement (36) sont formés des passages axiaux (78, 80) mettant en communication l'intérieur du tube-guide (16) et ladite ouverture de circulation (24) de la plaque de coeur (12) pour la circulation de réfrigérant.

FIG.1

EP 0 172 429 B1

FIG. 2

FIG. 3

2